# EUROPÄISCHE PATENTSCHRIFT

(11) **EP 4 008 171 B1**
(45) Veröffentlichungstag und Bekanntmachung des Hinweises auf die Patenterteilung: **28.01.2026**
(21) Anmeldenummer: 21199844.8
(22) Anmeldetag: 29.09.2021
(51) Int. Cl.: A01F 7/06, A01D 41/12

(54) **VERFAHREN ZUM BETREIBEN EINES MÄHDRESCHERS**
METHOD FOR OPERATING A COMBINE HARVESTER
PROCÉDÉ DE FONCTIONNEMENT D'UNE MOISSONNEUSE-BATTEUSE

(30) Priorität: 07.12.2020 DE 102020132401
(43) Veröffentlichungstag der Anmeldung: 08.06.2022
(73) Patentinhaber: CLAAS Selbstfahrende Erntemaschinen GmbH, 33428 Harsewinkel (DE)
(72) Erfinder: Topmöller, Philipp, 33442 Herzebrock-Clarholz (DE); Brand, Andreas, 33428 Marienfeld (DE); Beulke, Christian, 37589 Echte (DE); Elpmann, Manuel, 33154 Salzkotten (DE); Bußmann, Jens, 49179 Ostercappeln (DE)
(74) Vertreter: CLAAS Gruppe

(56) Entgegenhaltungen:
- EP-A1- 2 708 107
- EP-A1- 3 714 678
- US-A1- 2011 223 979
- US-A1- 2020 305 352
- US-B2- 9 220 195

## Beschreibung

Die vorliegende Erfindung betrifft ein Verfahren zum Betreiben eines selbstfahrenden Mähdreschers gemäß dem Oberbegriff des Anspruches 1 sowie einen selbstfahrenden Mähdrescher gemäß dem Oberbegriff des Anspruches 6.

Aus der DE 10 2019 107 840 A1 ist ein selbstfahrender Mähdrescher bekannt, bei dem die Ist-Verteilung eines von einer Axialabscheidevorrichtung generierten Restgutstroms auf eine nachgeordnete Verteilvorrichtung erfasst wird und ein Leitelement im endseitigen Gutabgabebereich der Axialabscheidevorrichtung verstellt wird, um die Ist-Verteilung einer Soll-Verteilung anzunähern. Sensoreinheiten zur Erfassung des Restgutstroms können an verschiedenen Stellen vor der Verteilvorrichtung vorgesehen sein, um die Verteilung des Restgutstroms über die Zuführbreite der Verteilvorrichtung zu erfassen.

Der Restgutstrom, der im Wesentlichen aus Strohbestandteilen besteht, wird von der Axialabscheidevorrichtung an ein nachgeschaltetes Arbeitsorgan des Mähdreschers, insbesondere einer Häckselvorrichtung, übergeben, wobei der Restgutstrom mittels mindestens eines bewegbaren Leitelements über eine Zuführbreite der Häckselvorrichtung verteilt wird. Mittels der Häckselvorrichtung wird der Restgutstrom bearbeitet, insbesondere zerkleinert bzw. gehäckselt. Dies ist insbesondere dann von Bedeutung, wenn der aus dem Mähdrescher der mittels der Verteilvorrichtung ausgebrachte Restgutstrom nicht weiter verwertet werden soll, insbesondere nicht vom Feld aufgehoben und einem weiteren Verwendungszweck zugeführt werden soll. Die Zerkleinerung des Restgutstroms ist vorteilhaft, um die biologische Zersetzung und die damit verbundene Rückführung von Nährstoffen in den Feldboden zu beschleunigen.

Das aus der DE 10 2019 107 840 A1 bekannte Verfahren berücksichtigt bei der Ansteuerung des Leitelementes die Gutverteilung nach Abgabe des Restgutsstromes Leitelement im endseitigen Gutabgabebereich der Axialabscheidevorrichtung, um eine möglichst gleichmäßige Verteilung durch die Verteilvorrichtung bei der Ausbringung aus dem Mähdrescher zu erreichen. Äußere Einflüsse bleiben bei der Ansteuerung des Leit-elements unberücksichtigt. US 2011 223 979 offenbart einen Mähdrescher mit einem beweglichen Führungselement an der Axialabscheidevorrichtung. Die Position dieses Elements kann in Abhängigkeit von der gemessenen Windstärke verändert werden.

Es ist somit Aufgabe der vorliegenden Erfindung, ein Verfahren zum Betreiben eines selbstfahrenden Mähdreschers sowie einen selbstfahrenden Mähdrescher der eingangs genannten Art weiterzubilden, so dass eine verbesserte Verteilung des Restgutstromes auf einem Feld erreicht wird.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe ausgehend vom Oberbegriff des nebengeordneten Anspruches 5 in Verbindung mit dessen kennzeichnenden Merkmalen.

Gemäß dem Anspruch 1 wird ein Verfahren zum Betreiben eines selbstfahrenden Mähdreschers vorgeschlagen, wobei ein von einer Axialabscheidevorrichtung generierter Restgutstrom einer nachgeordneten Verteilvorrichtung zugeführt wird, welche den Restgutstrom aus dem Mähdrescher ausbringt, wobei die Axialabscheidevorrichtung im endseitigen Gutabgabebereich zumindest ein durch einen Aktor bewegbares Leitelement aufweist, durch welches eine Ist-Verteilung des austretenden Restgutstroms über die Zuführbreite der Verteilvorrichtung beeinflusst wird, wobei die Ist-Verteilung des Restgutstroms durch zumindest eine Sensoreinheit erfasst und bei Erfassung einer Abweichung von einer vorgegebenen Soll-Verteilung das Leitelement nachgeregelt wird. Zur Lösung der eingangs gestellten Aufgabe ist vorgesehen, dass zumindest ein Seitenwind repräsentierendes Signal von zumindest einer Signalquelle einer Steuerungsvorrichtung bereitgestellt und durch die Steuerungsvorrichtung als Störgröße bei der automatischen Nachregelung des zumindest einen Leitelementes verwendet wird. Auf diese Weise wird der Einfluss von Seitenwind als externe Einflussgröße auf die Gleichmäßigkeit der Verteilung des Restgutstromes durch die Verteilvorrichtung auf dem Feld berücksichtigt. Unter dem Begriff Seitenwind ist ein unter einem Winkel zur Fahrrichtung des Mähdreschers gerichteter Luftstrom zu verstehen, wobei der Winkel ungleich 0° ist. Insbesondere kann die Verteilvorrichtung als Streublechverteiler ausgeführt sein. Das erfindungsgemäße Verfahren ist bei einer als Streublechverteiler ausgeführten Verteilvorrichtung besonders vorteilhaft, da bei einem Streublechverteiler die Beeinflussung der Ausbringung des Restgutes auf dem Feldboden im Unterschied zu einer als aktiv angetriebener Radialverteiler ausgeführten Verteilvorrichtung nur begrenzt möglich ist, um Seitenwindeinflüsse zu kompensieren.

Hierzu kann die Steuerungsvorrichtung kontinuierlich ein Signal von einer, insbesondere externen, Signalquelle, beispielsweise von einem am Feldrand aufgestellten Anemometer oder externen Dienstleister, empfangen. Alternativ oder zusätzlich können außenseitig an dem Mähdrescher zumindest zwei Sensoreinrichtungen als Signalquellen einander gegenüberliegend angeordnet sein, mittels derer das Auftreten von Seitenwind erfasst und den Seitenwind repräsentierende Signale erzeugt wird.

Erfindungsgemäß wird als Soll-Verteilung ein über die Zuführbreite der Verteilvorrichtung ausgeglichenes Verteilverhältnis vorgegeben und die Steuerungsvorrichtung wird mit einer Eingabe-Ausgabeeinheit des Mähdreschers verbunden, welche es einer Bedienperson des Mähdreschers ermöglicht, einen entsprechende Wert für die Soll-Verteilung vorzugeben. Die vorgegebene Soll-Verteilung kann insbesondere ein ausgeglichenes Verteilverhältnis vorsehen, gemäß dem der Restgutstrom im Wesentlichen hälftig aufgeteilt wird, sodass die Verteilvorrichtung über ihre Zuführbreite im Wesentlichen zu gleichen Teilen mit dem Restgutstrom beschickt wird. Denkbar sind Situation auf dem Feld, welche eine abweichende Verteilung des über die Zuführbreite von der Axialabscheidevorrichtung zugeführten Restgutstromes erforderlich werden lässt. Dies kann beispielsweise der Fall sein, wenn der Abstand des Mähdreschers zu einer Bestandskante kleiner ist, als die, bezogen auf eine Längsachse des Mähdreschers, eingestellte anteilige Verteilbreite gemäß der Soll-Verteilung. Mittels der zumindest einen Sensoreinheit kann eine von dieser Soll-Verteilung abweichende Ist-Verteilung erfasst und an die Steuerungsvorrichtung geleitet werden. Die Steuerungsvorrichtung ist in dazu eingerichtet, in Abhängigkeit von der festgestellten Abweichung der Ist-Verteilung von der Soll-Verteilung Regelungsbefehle zu erzeugen und diese an den Aktor des zumindest einen Leitelements zu übermitteln. Auf diese Weise wird das Leitelement derart nachgeregelt, dass die Ist-Verteilung der Soll-Verteilung zumindest angenähert wird. Mithin findet im Ergebnis eine Rückkopplung zwischen einer tatsächlichen Ist-Verteilung des Restgutstroms und der vorgegebenen Soll-Verteilung des Restgutstroms auf das Arbeitsorgan statt, die vorzugsweise fortwährend durchgeführt wird. Im Rahmen dieser Rückkopplung wird zusätzlich der durch die Sensoreinrichtungen detektierte Seitenwind als Störgröße berücksichtigt. Dabei kann die vorgegebene Soll-Verteilung, insbesondere kontinuierlich, an den Einfluss des Seitenwinds angepasst werden.

Zur Bestimmung des Einflusses des Seitenwinds auf die Verteilung ist vorgesehen, dass mittels zumindest zweier Sensoreinrichtungen Windstärke und Windrichtung unabhängig voneinander erfasst werden können. Auf diese Weise lassen sich Effekte, wie eine teilweisen Abschattung durch den Mähdrescher selbst, kompensieren. Zudem kann dadurch die Messgenauigkeit erhöht werden.

Insbesondere können die beiden Sensoreinrichtungen in einer gemeinsamen horizontalen Ebene am Mähdrescher angeordnet sein. Bei einer wechselseitigen Windabschattung einer der beiden Windmesseinrichtungen durch den Mähdrescher selbst, beispielsweise nach einer Vorgewendefahrt, werden stets die gleichen Messbedingungen beibehalten, unabhängig davon, welche der beiden Messeinrichtung vom Mähdrescher abgeschattet wird, da sich im Allgemeinen zumindest eine der beiden Windmesseinrichtungen auf der dem Wind zugewandten Seite des Mähdreschers befindet.

Weiterhin können von den zumindest zwei Sensoreinrichtungen generierte Signale für Windstärke und Windrichtung miteinander verglichen werden, wobei das Signal des Sensors mit größerer Signalstärke zur Kompensation des Einflusses des Seitenwindes bei der Ansteuerung des Aktors berücksichtigt wird. Auf diese Weise wird erreicht, dass bei einer auch teilweisen Abschattung einer der beiden Windmesseinrichtungen durch den Mähdrescher ein die tatsächlichen Seitenwindverhältnisse repräsentierendes Signal bereitgestellt wird, welches als Störgröße bei der Generierung der Regelungsbefehle zur Ansteuerung des Aktors neben der Abweichung zwischen Ist-Verteilung und Soll-Verteilung einfließt.

Vorzugsweise kann für eine Annäherung der Ist-Verteilung an die Soll-Verteilung eine Bewegungsgeschwindigkeit des zumindest einen Leitelements kontinuierlich verändert werden. Dadurch kann eine Verteilung des von der Axialabscheidevorrichtung an die Häckselvorrichtung übergebenen Restgutstroms verändert werden, bevor die Häckselvorrichtung den zerkleinerten Restgutstrom der Verteilvorrichtung zuführt.

Gemäß dem nebengeordneten Anspruch 5 wird ein selbstfahrender Mähdrescher vorgeschlagen, umfassend eine Axialabscheidevorrichtung, die einen Restgutstrom generiert und einer der Axialabscheidevorrichtung nachgeordneten Verteilvorrichtung zuführt, welche den Restgutstrom aus dem Mähdrescher ausbringt, wobei die Axialabscheidevorrichtung im endseitigen Gutabgabebereich zumindest ein durch einen Aktor bewegbares Leitelement aufweist, durch welches eine Ist-Verteilung des austretenden Restgutstroms über die Zuführbreite der Verteilvorrichtung beeinflusst wird, wobei zur Erfassung der Ist-Verteilung des Restgutstroms zumindest eine Sensoreinheit vorgesehen ist, und eine Steuerungsvorrichtung, die dazu eingerichtet ist, eine Abweichung von einer vorgegebenen Soll-Verteilung zu bestimmen und in Abhängigkeit von der Abweichung den Aktor zur Nachregelung des zumindest einen Leitelementes anzusteuern, wobei die Steuerungsvorrichtung dazu eingerichtet ist, zumindest ein Seitenwind repräsentierendes Signal von zumindest einer Signalquelle zu empfangen und als Störgröße bei der automatischen Nachregelung des zumindest einen Leitelementes zu verwenden. Die Verteilvorrichtung ist besonders bevorzugt als Streublechverteiler ausgeführt. Erfindungsgemäß wird als Soll-Verteilung ein über die Zuführbreite der Verteilvorrichtung ausgeglichenes Verteilverhältnis vorgegeben, wobei die Steuerungsvorrichtung mit einer Eingabe-Ausgabeeinheit des Mähdreschers verbunden ist, welche es einer Bedienperson des Mädreschers ermöglicht, einen entsprechende Wert für die Soll-Verteilung vorzugeben. Insbesondere können außenseitig an dem Mähdrescher zumindest zwei Sensoreinrichtungen als Signalquellen einander gegenüberliegend angeordnet sein, die zur Erfassung des Auftretens von Seitenwind eingerichtet sind. Die Steuerungsvorrichtung kann dazu eingerichtet sein, die Signale der Sensoreinrichtungen auszuwerten und als Störgröße bei der automatischen Nachregelung des Leitelementes zu verwenden.

Vorzugsweise sind die zumindest zwei Sensoreinrichtungen oberhalb der Verteilvorrichtung und unterhalb des Gutabgabebereiches der Axialabscheidevorrichtung angeordnet. Somit sind sie in geringerem Maße dem Einfluss von Verschmutzungen ausgesetzt. Zudem werden vorrangig die Windströmungsverhältnisse erfasst, die auf den Seitenwind zurückzuführen sind.

Insbesondere können die von zumindest zwei einander gegenüberliegend angeordneten Sensoreinrichtungen gebildeten Signalquellen als Windplatte, Flügelradanemometer oder Schalenanemometer ausgeführt sein. Die Ausführung als mechanische Sensoreinrichtungen ist einfach und kostengünstig. Insbesondere ist eine Nachrüstbarkeit an dem Mähdrescher möglich.

Des Weiteren kann die zumindest eine Sensoreinheit zur Bestimmung der Ist-Verteilung an zumindest einer Messstelle im Zuführbereich einer der Axialabscheidevorrichtung nachgeordneten Häckselvorrichtung und/oder an einem eine Messertrommel der nachgeordneten Häckselvorrichtung abschnittsweise umschließenden Boden angeordnet sein. Durch eine Anordnung der zumindest einen Sensoreinheit im Zuführbereich der Häckselvorrichtung wird die Möglichkeit geschaffen, die Verteilung des Restgutstroms im Wesentlichen über die Breite der Häckselvorrichtung hinweg zu erfassen. Durch die alternative oder zusätzliche Anordnung der zumindest einen Sensoreinheit am Boden der Häckselvorrichtung wird die Möglichkeit geschaffen, die Verteilung des Restgutstroms auch innerhalb der Häckselvorrichtung zu erfassen. Insbesondere die Kombination beider Anordnungen der Sensoreinheiten ist besonders vorteilhaft, um eine Verteilung des Restgutstroms im Wesentlichen über die Breite der Häckselvorrichtung dynamisch verfolgen zu können. Insbesondere können durch den Betrieb der Häckselvorrichtung bedingte Wanderungen des Restgutstroms in Breitenrichtung der Häckselvorrichtung stattfinden, die bei alleiniger Erfassung von Daten betreffend die Ist-Verteilung des Restgutstroms beispielsweise in dem Zuführbereich der Häckselvorrichtung nicht berücksichtigt werden könnten.

Bevorzugt kann die zumindest eine Sensoreinheit als eine Messleiste ausgeführt sein, wobei die zumindest eine Sensoreinheit mehrere zueinander beabstandete Sensorelemente aufweist. Eine solche Messleiste umfasst eine Mehrzahl voneinander beabstandeter Sensorelemente, die vorzugsweise äquidistant entlang der Messleiste verteilt angeordnet sind. Insbesondere ist es denkbar, dass die als Messleiste ausgebildete Sensoreinheit sich jeweils über eine Breite eines jeweilig überwachten Bereichs hinweg erstrecken, so dass eine Querverteilung des Restgutstroms in dem jeweiligen Bereich erfassbar ist. Bei einer beispielsweise in dem Zuführbereich der Häckselvorrichtung angeordneten Messleiste kann sich die Messleiste im Wesentlichen über die Breite der Häckselvorrichtung hinweg erstrecken, wobei eine Mehrzahl, beispielsweise fünf, Sensorelemente über die Länge der Messleiste hinweg verteilt angeordnet sind. Auf diese Weise erfasste Daten sind besonders gut geeignet, die Ist-Verteilung des Restgutstroms zu beurteilen.

Die vorliegende Erfindung wird nachstehend anhand eines in den Zeichnungen dargestellten Ausführungsbeispieles näher erläutert.

Es zeigen:
- Fig. 1: einen Querschnitt durch einen Mähdrescher;
- Fig. 2: schematisch einen Übergangsbereich zwischen einer Axialabscheidevorrichtung und einer Häckselvorrichtung des Mähdreschers aus Fig. 1;

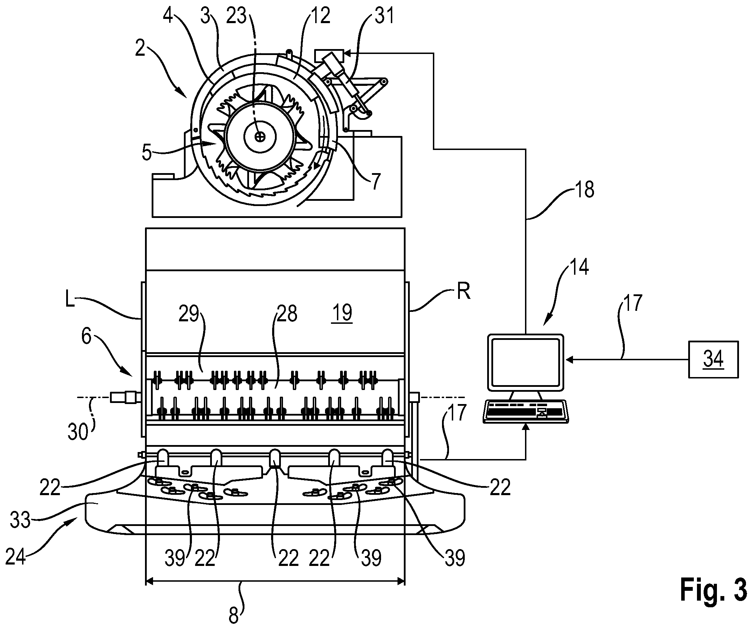

- Fig. 3: schematisch einen Übergangsbereich zwischen der Axialabscheidevorrichtung und der Häckselvorrichtung des Mähdreschers aus Fig. 2 mit einer als Streublechverteiler ausgeführten Verteilvorrichtung;
- Fig. 4: eine perspektivische Teilansicht des rückwärtigen Bereichs des Mähdreschers sowie eine Detailansicht einer Sensoreinrichtung zur Seitenwinderfassung.

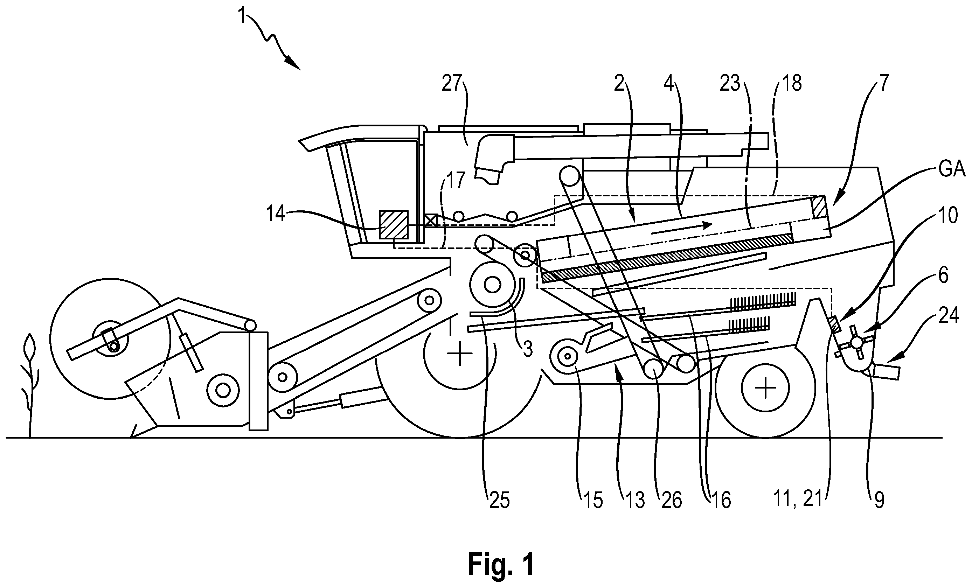

In Fig. 1 ist ein Querschnitt durch einen selbstfahrenden Mähdrescher 1 dargestellt. Der Mähdrescher 1 umfasst eine Dreschvorrichtung 3, der eine Axialabscheidevorrichtung 2 nachgeschaltet ist. Die Dreschvorrichtung 3 übergibt einen Erntegutstrom an die Axialabscheidevorrichtung 2. Mittels der Dreschvorrichtung 3 werden geernteten Pflanzen bearbeitet, sodass Körner von verbleibenden Pflanzenresten, im Wesentlichen Spreu und Stroh, abgelöst werden. Ein Großteil der Körner wird durch zumindest einen Dreschkorb 25 hindurch unmittelbar einem unterhalb des zumindest einen Dreschkorbs 25 angeordneten Vorbereitungsboden zugeführt. Von dem Vorbereitungsboden gelangen die Körner zu einer Reinigungsvorrichtung 13, die ein Gebläse 15 sowie mehrere Siebe 16 umfasst. Die Reinigungsvorrichtung 13 scheidet Kurzstrohbestandteile sowie Spreu von den Körnern ab.

Anschließend werden die gereinigten Körner in Richtung einer Fördereinrichtung 26 abgeleitet, mittels der die Körner in einen Korntank 27 gefördert werden. Die verbleibenden Pflanzenreste werden gemeinsam mit restlichen Körnern, die nicht unmittelbar durch die Dreschvorrichtung 3 abgeschieden werden konnten, an die Axialabscheidevorrichtung 2 übergeben. Die restlichen Körner und die Pflanzenreste bilden mithin gemeinsam den der Axialabscheidevorrichtung 2 zur Weiterbearbeitung zugeführten Erntegutstrom. Die Axialabscheidevorrichtung 2 dient dazu, die in dem übernommenen Erntegutstrom enthaltenen Körner von den Pflanzenresten zu trennen, sodass die Körner möglichst vollständig gewonnen werden. Der Erntegutstrom wird mittels der Axialabscheidevorrichtung 2 infolge Abtrennung des von Körnern gebildeten Gutanteils in einen Restgutstrom überführt. Letzterer besteht im Wesentlichen aus den Pflanzenresten, die als Restgut bezeichnet werden.

Die Abscheidung der Körner durch die Axialabscheidevorrichtung 2 erfolgt mittels zumindest eines um seine Längsachse 23 drehangetriebenen Axialrotors 5, der innerhalb eines Gehäuses 4 der Axialabscheidevorrichtung 2 gelagert ist. Die Axialabscheidevorrichtung 2 kann einen Axialrotor 5 oder zwei parallel zueinander angeordneten Axialrotoren 5 aufweisen, die jeweils in einem separaten Gehäuse 4 angeordnet sind.

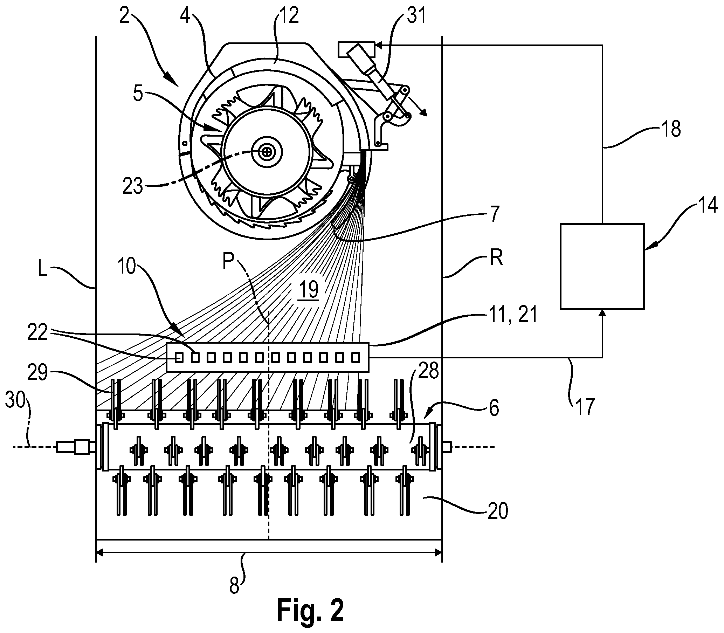

An einem der Dreschvorrichtung 3 abgewandten rückwärtigen endseitigen Gutabgabebereich GA der Axialabscheidevorrichtung 2 umfasst selbiger zumindest ein Leitelement 7, das hier von einem Leitblech gebildet ist, das einer Krümmung des Gehäuses 4 entsprechend gekrümmt ausgebildet ist. Das zumindest eine Leitelement 7 ist relativ zu dem Gehäuse 4 beweglich ausgebildet und wirkt zu diesem Zweck mit einem, insbesondere elektrohydraulischen, Aktor 31 zusammen, mittels dessen das Leitelement 7 antreibbar ist, wie in Fig. 2 dargestellt ist. Im Fall der Axialabscheidevorrichtung 2 mit zwei Axialrotoren 5 weist jeder Axialrotor 5 ein Gehäuse 4 mit einem im Gutabgabebereich GA angeordneten Leitelement 7 und einem Aktor 31 auf.

Anstelle der separaten, als Tangentialdreschwerk ausgeführten Dreschvorrichtung 3 kann die Dreschvorrichtung zusammen mit der Axialabscheidevorrichtung als eine Kombination aus Axialdreschrotor und Axialtrennrotor ausgeführt sein.

Das Leitelement 7 wird abschnittsweise mittels des Aktors 31 in Umfangsrichtung des Gehäuses 4 bewegt. Der die Axialabscheidevorrichtung 2 verlassende Restgutstrom, der innerhalb des Gehäuses 4 mittels Führungselementen 12 spiralförmig bzw. wendelförmig geführt wird, tritt schwerpunktmäßig an dem begrenzten Gutabgabebereich GA des Gehäuses 4 aus. Das Leitelement 7 ist diesem Gutabgabebereich GA zugeordnet, sodass das Leitelement 7 eine Strömung des Restgutstroms beeinflussen kann. Insbesondere ragt das Leitelement 7 in einen Strömungsbereich des Restgutstroms hinein, sodass der Restgutstrom beim Verlassen der Axialabscheidevorrichtung 2 auf das Leitelement 7 treffen kann und hierdurch umlenkbar ist. Mittels Bewegung des Leitelements 7 relativ zu dem Gehäuse 4 kann der Einfluss des Leitelements 7 auf die Art bzw. die Intensität der Umlenkung des Restgutstroms verändert werden. Dies hat zur Folge, dass der Restgutstrom in Abhängigkeit von einer Stellung des Leitelements 7 in unterschiedlicher Art und Weise an ein der Axialabscheidevorrichtung 2 nachgeschaltetes Arbeitsorgan übergeben wird. Letzteres ist hier als Häckselvorrichtung 6 ausgebildet.

Die Häckselvorrichtung 6 ist vertikal unterhalb der Axialabscheidevorrichtung 2 angeordnet, sodass der im Gutabgabebereich aus der Axialabscheidevorrichtung 2 abgegebener Restgutstrom in die Häckselvorrichtung 6 fällt. Die Häckselvorrichtung 6 verfügt über eine langgestreckte Messertrommel 28, an deren äußerer Mantelfläche eine Vielzahl von Häckselmessern 29 fliegend gelagert angeordnet sind. Diese sind gelenkig an der Messertrommel 28 befestigt, sodass sie im Zuge einer Rotation der Messertrommel 28 um eine Antriebsachse 30 der Häckselvorrichtung 6 aufgrund wirkender Fliehkräfte radial nach außen geschleudert werden. Die im Zuge der Rotation der Messertrommel 28 wirkende kinetische Energie wird dazu verwendet, um mittels der Häckselmesser 29 den in die Häckselvorrichtung 6 herabfallende Restgutstrom zu zerkleinern. Die Messertrommel 28 der Häckselvorrichtung 6 erstreckt sich über eine Breite 8, welche im Wesentlichen die Arbeitsbreite der Häckselvorrichtung 6 darstellt. Mittels des Leitelements 7 ist es nunmehr möglich, den Restgutstrom über die Breite 8 der Häckselvorrichtung 6 zu verteilen, sodass die der Häckselvorrichtung 6 über ihre Breite 8 hinweg möglichst gleichmäßig mit dem Restgutstrom beschickt wird. Hieraus ergibt sich, dass eine Weitergabe gehäckselten Restgutes an eine nachgeschaltete Verteilvorrichtung 9 gleichermaßen in einer zu gleichen Teilen stattfindenden Verteilung erfolgt, wodurch wiederum ein gleichmäßiger Abwurf des Restgutes an dem rückwärtigen Ende des Mähdreschers 1 begünstigt wird.

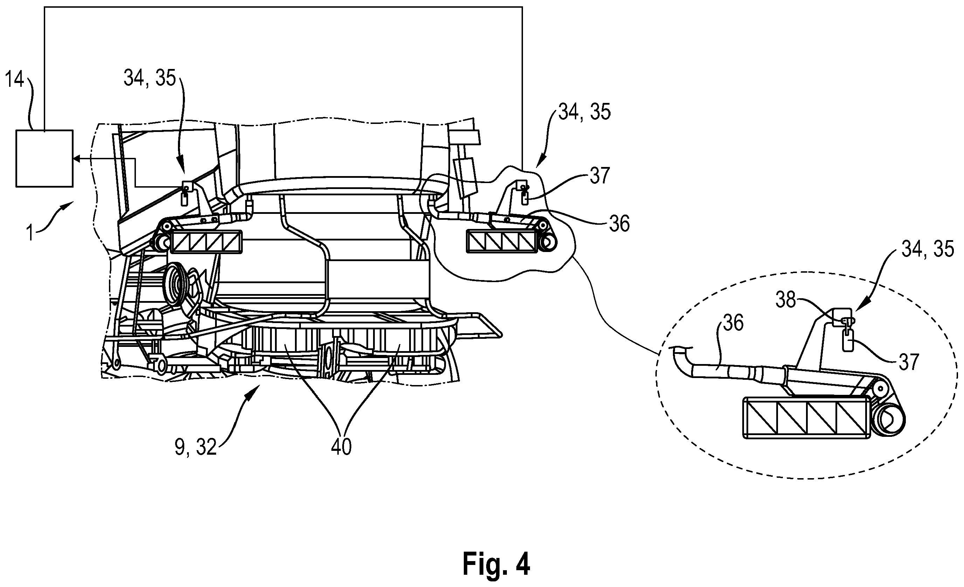

Die Verteilvorrichtung 9 kann als ein aktiv angetriebener Radialverteiler 32 ausgeführt sein, wie dieser beispielhaft in Fig. 4 dargestellt ist. Bevorzugt ist die Verteilvorrichtung 9 als ein Streublechverteiler 24 ausgeführt. Die als Streublechverteiler 24 ausgeführte Verteilvorrichtung 9 umfasst ein Deckelbauteil 33, auf dessen Unterseite nicht dargestellte Streuleitbleche angeordnet sind. Die Streuleitbleche sind jeweils um eine vertikale Achse verschwenkbar an dem Deckelbauteil 18 angeordnet. Im Inneren des Deckelbauteils 18 sind Betätigungsmittel 39 angeordnet, mittels der die Streuleitbleche um die jeweilige vertikale Achse einzeln und/oder gruppenweise verschwenkbar sind. Ein solcher Streublechverteiler ist beispielsweise aus der DE10 2018 131 432 A1 bekannt.

Bezogen auf eine Symmetrieebene P der Häckselvorrichtung 6 weisen die Streuleitbleche, die links und rechts der Symmetrieebene P angeordnet sind, gegensinnige Krümmungsverläufe auf, sodass ausgehend von der Mitte der als Streublechverteiler 24 ausgeführten Verteilvorrichtung 9 eine Verteilung des Restgutes im Wesentlichen über die Arbeitsbreite des Mähdreschers 1 erfolgen kann. Dabei wird zur Verteilung des Restgutes die von der Häckselvorrichtung 6 beim Häckseln aufgeprägte kinetische Energie verwendet. Da mittels des Betätigungsmittels oder der Betätigungsmittel des Streublechverteilers 24 nur Einfluss auf die Umlenkung des Restgutstroms durch die Streuleitbleche genommen werden kann, nicht jedoch auf die kinetische Energie, mit der das Restgut ausgebracht wird, ist der Seitenwindeinfluss auf die Verteilung durch den Streublechverteiler 24 ungleich höher als bei einer als aktiv angetriebenem Radialverteiler ausgeführten Verteilvorrichtung 9.

Im Ergebnis hat die Stellung des Leitelements 7 an der Axialabscheidevorrichtung 2 einen mittelbaren Einfluss darauf, in welcher Weise das Restgut im Zuge seines Auswurfs aus dem Mähdrescher 1 durch die als Streublechverteiler 24 ausgeführte Verteilvorrichtung 9 auf dem Feld verteilt wird. Eine Veränderung der Stellung des Leitelements 7 relativ zu dem Gehäuse 4 der Axialabscheidevorrichtung 2 führt folglich dazu, dass sich auch die Verteilung des Restgutes auf dem Feld verändert.

Mittels wenigstens einer Sensoreinheit 10, der an einer Messstelle 11 im Zuführbereich bzw. Einfallbereich 19 der Häckselvorrichtung 6 angeordnet ist, kann festgestellt werden, dass bezogen auf die Symmetrieachse P die linke Seite L der Häckselvorrichtung 6 einen größeren Anteil des von der Axialabscheidevorrichtung 2 übergebenen Restgutstroms erhält als die rechte Seite R. Die Sensoreinheit 10 ist vorzugsweise als Messleiste 21 ausgeführt und umfasst eine Mehrzahl voneinander beabstandeter Sensorelementen 22, die vorzugsweise äquidistant entlang der Messleiste 21 verteilt angeordnet sind. Insbesondere ist es vorteilhaft, wenn sich die als Messleiste 21 ausgebildete Sensoreinheit 10 jeweils über die Breite des jeweilig überwachten Bereichs, hier des Einfallbereiches 19, hinweg erstreckt, sodass eine Querverteilung des Restgutes in dem jeweiligen Bereich erfasst wird. Bei der Anordnung der Messleiste 21 in dem Einfallbereich 19 der Häckselvorrichtung 6 erstreckt sich die Messleiste 21 im Wesentlichen über die Breite 8 der Häckselvorrichtung 6 hinweg. Des Weiteren kann die zumindest eine Sensoreinheit 10 zur Bestimmung der Ist-Verteilung an zumindest einer Messstelle auf dem die Messertrommel 28 der nachgeordneten Häckselvorrichtung 6 abschnittsweise umschließenden Boden 20 angeordnet sein. Durch eine Anordnung der zumindest einen Sensoreinheit 10 im Zuführbereich bzw. Einfallbereich 19 der Häckselvorrichtung 6 wird die Möglichkeit geschaffen, die Verteilung des Restgutstroms im Wesentlichen über die Breite 8 der Häckselvorrichtung 6 hinweg zu erfassen. Durch die alternative oder zusätzliche Anordnung der zumindest einen Sensoreinheit 10 am Boden 20 der Häckselvorrichtung 6 wird die Möglichkeit geschaffen, die Verteilung des Restgutstroms auch innerhalb der Häckselvorrichtung 6 zu erfassen. Dabei kann die Kombination beider Anordnungen der Sensoreinheiten 10 besonders vorteilhaft sein, um eine Verteilung des Restgutstroms im Wesentlichen über die Breite 8 der Häckselvorrichtung 6 dynamisch verfolgen zu können.

Die ungleichmäßige Abgabe des von der Axialabscheidevorrichtung 2 übergebenen Restgutstroms hat zur Folge, dass die Ist-Verteilung des Restgutstroms auch beim Austritt aus der Häckselvorrichtung 6 und somit die Übergabe an die Verteilvorrichtung 9 asymmetrisch ist. Letzteres beeinflusst wiederum die Gleichmäßigkeit der Ausbringung durch die Verteilvorrichtung 9. Die vorgegebene Soll-Verteilung sieht jedoch eine gleichmäßige Verteilung des Restgutstroms an die an die Verteilvorrichtung 9 vor, um eine möglichst homogene Verteilung des Restgutes auf dem Feld zu erreichen. Der Unterschied zwischen der Ist-Verteilung und der Soll-Verteilung wird mittels der Steuerungsvorrichtung 14 dahingehend umgesetzt, dass ein Regelungsbefehl an den Aktor 31 des Leitelements 7 geleitet wird, infolgedessen das Leitelement 7 bewegt wird. Diese Bewegung erfolgt derart, dass die mittels des Leitelements 7 bewirkte Ablenkung und die sich daraus ergebende Verteilung des Restgutstroms auf die Häckselvorrichtung 6 dahingehend verändert wird, dass der rechten Seite R der Häckselvorrichtung 6 ein größerer Anteil des Restgutstroms zugeleitet wird als zuvor. In mittelbarer Folge dieses Eingriffs wird die Ist-Verteilung des Restgutstroms an die Soll-Verteilung angenähert.

In besonders vorteilhafter Weise wird das Leitelement 7 fortwährend relativ zu dem Gehäuse 4 der Axialabscheidevorrichtung 2 bewegt, um den Restgutstrom kontinuierlich über die Breite 8 der Häckselvorrichtung 6 zu verteilen. Insbesondere kann das Leitelement 7 eine "pendelnde" Bewegung ausführen, in deren Zuge das Leitelement 7 fortwährend zwischen einander gegenüberliegenden extremen Stellungen bewegt wird. Eine pendelnde Bewegung des Leitelements 7 ist mithin besonders günstig, um die Häckselvorrichtung 6 fortwährend über ihre gesamte Breite 8 gleichmäßig mit Restgut zu beschicken und hierdurch eine entsprechende gleichteilige Beschickung der Verteilvorrichtung 9 zu erzielen.

In Fig. 4 ist eine perspektivische Teilansicht des rückwärtigen Bereichs des Mähdreschers 1 sowie eine Detailansicht einer Sensoreinrichtung 34 zur Seitenwinderfassung dargestellt. im dargestellten Ausführungsbeispiel ist die Verteilvorrichtung 9 lediglich beispielhaft als Radialverteiler 32 ausgeführt, welcher paarweise angeordnete Läufer 40 aufweist. Die Läufer 40 sind gegensinnig rotierend angetrieben. Der Antrieb der Läufer 40 erfolgt vorzugsweise hydraulisch oder mechanisch.

Oberhalb der Verteilvorrichtung 9 sind zumindest zwei Sensoreinrichtungen 34 als Signalquellen zur Bereitstellung zumindest eines einen Seitenwind repräsentierenden Signals angeordnet. Die zumindest zwei Sensoreinrichtungen 34 sind oberhalb der Verteilvorrichtung 9, 24 und unterhalb des Gutabgabebereiches GA der Axialabscheidevorrichtung 2 angeordnet. Somit sind sie in geringerem Maße dem Einfluss von Verschmutzungen ausgesetzt. Damit werden vorrangig die Windströmungsverhältnisse im Bereich der Verteilvorrichtung 9 erfasst, die auf den Seitenwind zurückzuführen sind.

Die zumindest zwei einander gegenüberliegend angeordneten Sensoreinrichtungen 34 sind als Windplatten 35 ausgeführt. Alternative Ausführungen der Sensoreinrichtungen 34 können Flügelradanemometer oder Schalenanemometer sein.

Die als Windplatten 35 ausgeführten Sensoreinrichtungen 34 sind an Schwenkarmen 36 angeordnet, die auf beiden Seiten des Mähdreschers 1 befestigt sind. Die Windplatten 35 weisen jeweils ein plattenförmiges Element 37 auf, welches um eine horizontale Schwenkachse schwenkbar ist. Die Schwenkachse ist im Wesentlichen parallel zur Fahrrichtung orientiert, so dass der Fahrtwind nahezu keinen Einfluss auf die Messung hat. Die durch Seitenwind verursachte Auslenkung des jeweiligen plattenförmigen Elements 37 wird mittels eines Winkelsensors 38 erfasst. Die Winkelsensoren 38 übermitteln ihre Signale drahtgebunden oder drahtlos an die Steuerungsvorrichtung 14 zur Auswertung.

Da der Seitenwind die Verteilung des von der Verteilvorrichtung 9 ausgebrachten Restgutstroms auf dem Feld beeinflussen kann, werden die Signale der Sensoreinrichtungen 34 an die Steuerungsvorrichtung 14 übertragen und von dieser ausgewertet. Zumindest ein den Seitenwind repräsentierendes Signal wird von den Sensoreinrichtungen 34 als Signalquelle der Steuerungsvorrichtung 14 bereitgestellt und durch die Steuerungsvorrichtung 14 als Störgröße bei der automatischen Nachregelung des Leitelementes 7 verwendet. Durch die zusätzliche Berücksichtigung des beim Ausbringen auftretenden Seitenwinds bei der Nachregelung des Leitelementes 7 wird bereits zu einem frühen Zeitpunkt vor dem Erreichen der Verteilvorrichtung 9 durch das Restgut eine Kompensation des Einflusses des Seitenwinds auf die Verteilung erreicht. Somit wird das Erreichen einer homogenen Verteilung des Restgutes, insbesondere durch die als Streublechverteiler 24 ausgeführte Verteilvorrichtung 9, auf dem Feldboden verbessert.

### Bezugszeichenliste

| | | | |
|---|---|---|---|
| 1 | Mähdrescher | 33 | Deckelbauteil |
| 2 | Axialabscheidevorrichtung | 34 | Sensoreinrichtung |
| 3 | Dreschvorrichtung | 35 | Windplatte |
| 4 | Gehäuse | 36 | Schwenkarm |
| 5 | Axialrotor | 37 | Plattenförmiges Element |
| 6 | Häckselvorrichtung | 38 | Winkelsensor |
| 7 | Leitelement | 39 | Betätigungsmittel |
| 8 | Breite | 40 | Läufer |
| 9 | Verteilvorrichtung | GA | Gutabgabebereich |
| 10 | Sensoreinheit | P | Symmetrieachse |
| 11 | Messstelle | L | Linke Seite von 6 |
| 12 | Führungselement | R | Rechte Seite von 6 |
| 13 | Reinigungsvorrichtung | | |
| 14 | Steuerungsvorrichtung | | |
| 15 | Gebläse | | |
| 16 | Sieb | | |
| 17 | Leitung | | |
| 18 | Leitung | | |
| 19 | Einfallbereich | | |
| 20 | Boden | | |
| 21 | Messleiste | | |
| 22 | Sensorelement | | |
| 23 | Längsachse | | |
| 24 | Streublechverteiler | | |
| 25 | Dreschkorb | | |
| 26 | Fördereinrichtung | | |
| 27 | Korntank | | |
| 28 | Messertrommel | | |
| 29 | Häckselmesser | | |
| 30 | Antriebsachse | | |
| 31 | Aktor | | |
| 32 | Radialverteiler | | |

## Patentansprüche

1. Verfahren zum Betreiben eines selbstfahrenden Mähdreschers (1), wobei ein von einer Axialabscheidevorrichtung (2) generierter Restgutstrom einer nachgeordneten Verteilvorrichtung (9, 24) zugeführt wird, welche den Restgutstrom aus dem Mähdrescher (1) ausbringt, wobei die Axialabscheidevorrichtung (2) im endseitigen Gutabgabebereich (GA) zumindest ein durch einen Aktor (31) bewegbares Leitelement (7) aufweist, durch welches eine Ist-Verteilung des austretenden Restgutstroms über die Zuführbreite der Verteilvorrichtung (9, 24) beeinflusst wird, wobei die Ist-Verteilung des Restgutstroms durch zumindest eine Sensoreinheit (10) erfasst und bei Erfassung einer Abweichung von einer vorgegebenen Soll-Verteilung das Leitelement (7) nachgeregelt wird, wobei zumindest ein Seitenwind repräsentierendes Signal von zumindest einer Signalquelle (34, 35) einer Steuerungsvorrichtung (14) bereitgestellt und durch die Steuerungsvorrichtung (14) als Störgröße bei der automatischen Nachregelung des zumindest einen Leitelementes (7) verwendet wird, wobei als Soll-Verteilung ein über die Zuführbreite der Verteilvorrichtung (9, 24) ausgeglichenes Verteilverhältnis vorgegeben wird, **dadurch gekennzeichnet, dass** die Steuerungsvorrichtung (14) mit einer Eingabe-Ausgabeeinheit des Mähdreschers (1) verbunden ist, welche es einer Bedienperson des Mähdreschers (1) ermöglicht, einen entsprechende Wert für die Soll-Verteilung vorzugeben.

2. Verfahren nach Anspruch 1, **dadurch gekennzeichnet, dass** mittels zumindest zweier Sensoreinrichtungen (34, 35) Windstärke und Windrichtung unabhängig voneinander erfasst werden.

3. Verfahren nach Anspruch 2, **dadurch gekennzeichnet, dass** von den zumindest zwei Sensoreinrichtungen (34, 35) generierte Signale für Windstärke und Windrichtung miteinander verglichen werden, wobei das Signal der Sensoreinrichtung (34, 35) mit größerer Signalstärke zur Kompensation des Einflusses des Seitenwindes berücksichtigt wird.

4. Verfahren nach einem der Ansprüche 1 bis 3, **dadurch gekennzeichnet, dass** für eine Annäherung der Ist-Verteilung an die Soll-Verteilung eine Bewegungsgeschwindigkeit des zumindest einen Leitelements (7) kontinuierlich verändert wird.

5. Selbstfahrender Mähdrescher (1), umfassend eine Axialabscheidevorrichtung (2), die einen Restgutstrom generiert und einer der Axialabscheidevorrichtung (2) nachgeordneten Verteilvorrichtung (9), insbesondere einem Streublechverteiler (24), zuführt, welche den Restgutstrom aus dem Mähdrescher (1) ausbringt, wobei die Axialabscheidevorrichtung (2) im endseitigen Gutabgabebereich (GA) zumindest ein durch einen Aktor (31) bewegbares Leitelement (7) aufweist, durch welches eine Ist-Verteilung des austretenden Restgutstroms über die Zuführbreite der Verteilvorrichtung (9) beeinflusst wird, wobei zur Erfassung der Ist-Verteilung des Restgutstroms zumindest eine Sensoreinheit (10) vorgesehen ist, und eine Steuerungsvorrichtung (14), die dazu eingerichtet ist, eine Abweichung von einer vorgegebenen Soll-Verteilung zu bestimmen und in Abhängigkeit von der Abweichung den Aktor (31) zur Nachregelung des Leitelementes (7) anzusteuern, wobei die Steuerungsvorrichtung (14) dazu eingerichtet ist, zumindest ein Seitenwind repräsentierendes Signal von zumindest einer Signalquelle (34, 35) zu empfangen und als Störgröße bei der automatischen Nachregelung des Leitelementes (7) zu verwenden, wobei als Soll-Verteilung ein über die Zuführbreite der Verteilvorrichtung (9, 24) ausgeglichenes Verteilverhältnis vorgegeben wird, **dadurch gekennzeichnet, dass** die Steuerungsvorrichtung (14) mit einer Eingabe-Ausgabeeinheit des Mähdreschers (1) verbunden ist, welche es einer Bedienperson des Mähdreschers (1) ermöglicht, einen entsprechende Wert für die Soll-Verteilung vorzugeben.

6. Mähdrescher (1) nach Anspruch 6, **dadurch gekennzeichnet, dass** die zumindest zwei Sensoreinrichtungen (34, 35) oberhalb der Verteilvorrichtung (9) und unterhalb des Gutabgabebereiches (GA) der Axialabscheidevorrichtung (2) angeordnet sind.

7. Mähdrescher (1) nach Anspruch 6 oder 7, **dadurch gekennzeichnet, dass** die zumindest zwei einander gegenüberliegend angeordneten Sensoreinrichtungen (34) als Windplatte (35), Flügelradanemometer oder Schalenanemometer ausgeführt sind.

8. Mähdrescher (1) nach einem der Ansprüche 6 bis 8, **dadurch gekennzeichnet, dass** die zumindest eine Sensoreinheit (10) an zumindest einer Messstelle (11) im Zuführbereich (19) einer der Axialabscheidevorrichtung (2) nachgeordneten Häckselvorrichtung (6) und/oder am eine Messertrommel der nachgeordneten Häckselvorrichtung (6) abschnittsweise umschließenden Boden (20) angeordnet ist.

9. Mähdrescher (1) nach einem der Ansprüche 6 bis 9, **dadurch gekennzeichnet, dass** die zumindest eine Sensoreinheit (10) als eine Messleiste (21) ausgeführt ist, die mehrere zueinander beabstandete Sensorelemente (22) aufweist.

## Claims

1. Method for operating a self-propelled combine harvester (1), wherein a residual flow of material generated by an axial separating device (2) is fed to a downstream distributing device (9, 24), which discharges the residual flow of material from the combine harvester (1), wherein the axial separating device (2) has in the end-side material delivery region (GA) at least one guide element (7), which can be moved by an actuator (31) and by which an actual distribution of the emerging residual flow of material over the feed width of the distributing device (9, 24) is influenced, wherein the actual distribution of the residual flow of material is sensed by at least one sensor unit (10) and, if a deviation from a specified target distribution is sensed, the guide element (7) is readjusted, wherein at least one signal representing side wind is provided by at least one signal source (34, 35) of a control device (14) and is used by the control device (14) as a disturbance variable in the automatic readjustment of the at least one guide element (7), wherein a distribution ratio balanced over the feed width of the distributing device (9, 24) is specified as the target distribution, **characterized in that** the control device (14) is connected to an input/output unit of the combine harvester (1) which enables an operator of the combine harvester (1) to specify a corresponding value for the target distribution.

2. Method according to Claim 1, **characterized in that** wind strength and wind direction are sensed independently of one another by means of at least two sensor devices (34, 35).

3. Method according to Claim 2, **characterized in that** signals generated by the at least two sensor devices (34, 35) for wind strength and wind direction are compared with one another, wherein the signal of the sensor device (34, 35) with greater signal strength is taken into account for compensating the influence of the side wind.

4. Method according to one of Claims 1 to 3, **characterized in that**, in order for the actual distribution to approach the target distribution, the speed of movement of the at least one guide element (7) is continuously changed.

5. Self-propelled combine harvester (1), comprising an axial separating device (2), which generates a residual flow of material and feeds it to a distributing device (9), in particular a spreader plate distributor (24), arranged downstream of the axial separating device (2), which discharges the residual flow of material from the combine harvester (1), wherein the axial separating device (2) has in the end-side material delivery region (GA) at least one guide element (7), which can be moved by an actuator (31) and by which an actual distribution of the emerging residual flow of material over the feed width of the distributing device (9) is influenced, wherein at least one sensor unit (10) is provided for sensing the actual distribution of the residual flow of material, and comprising a control device (14), which is designed to determine a deviation from a specified target distribution and, dependent on the deviation, activate the actuator (31) for readjusting the guide element (7), wherein the control device (14) is designed to receive at least one signal representing side wind from at least one signal source (34, 35) and use it as a disturbance variable in the automatic readjustment of the guide element (7), wherein a distribution ratio balanced over the feed width of the distributing device (9, 24) is specified as the target distribution, **characterized in that** the control device (14) is connected to an input/output unit of the combine harvester (1) which enables an operator of the combine harvester (1) to specify a corresponding value for the target distribution.

6. Combine harvester (1) according to Claim 6, **characterized in that** the at least two sensor devices (34, 35) are arranged above the distributing device (9) and below the material delivery region (GA) of the axial separating device (2).

7. Combine harvester (1) according to Claim 6 or 7, **characterized in that** the at least two sensor devices (34), arranged opposite one another, are configured as a wind deflector (35), a vane anemometer or a cup anemometer.

8. Combine harvester (1) according to one of Claims 6 to 8, **characterized in that** the at least one sensor unit (10) is arranged at at least one measuring point (11) in the feeding region (19) of a chopping device (6), arranged downstream of the axial separating device (2), and/or on the floor (20) partially enclosing a cutter drum of the downstream chopping device (6).

9. Combine harvester (1) according to one of Claims 6 to 9, **characterized in that** the at least one sensor unit (10) is configured as a measuring strip (21), which has a number of spaced-apart sensor elements (22).

## Revendications

1. Procédé de fonctionnement d'une moissonneuse-batteuse (1) automotrice, selon lequel un flux de produit résiduel généré par un dispositif de séparation axial (2) est amené à un dispositif d'épandage (9, 24) qui est installé en aval et évacue le flux de produit résiduel de la moissonneuse-batteuse (1), le dispositif de séparation axial (2) comportant, dans la zone de distribution de produit (GA) côté extrémité, au moins un élément de guidage (7) qui peut être déplacé par un actionneur (31) et agit sur une répartition réelle du flux de produit résiduel sortant, sur la largeur d'amenée du dispositif d'épandage (9, 24), la répartition réelle du flux de produit résiduel étant détectée par au moins une unité à capteur (10) et faisant l'objet d'un ajustement en cas de détection d'un écart par rapport à une répartition de consigne prédéfinie, sachant qu'au moins un signal représentant un vent latéral est fourni par au moins une source de signal (34, 35) d'un dispositif de commande (14) et est utilisé par le dispositif de commande (14) en tant que grandeur perturbatrice lors de l'ajustement automatique de l'élément de guidage (7), au nombre d'au moins un, un rapport de répartition équilibré sur la largeur d'amenée du dispositif d'épandage (9, 24) étant prédéfini en tant que répartition de consigne, **caractérisé en ce que** le dispositif de commande (14) est relié à une unité d'entrée-sortie de la moissonneuse-batteuse (1), laquelle permet à un opérateur de la moissonneuse-batteuse (1) de prédéfinir une valeur correspondante pour la répartition de consigne.

2. Procédé selon la revendication 1, **caractérisé en ce que** l'intensité du vent et la direction du vent sont détectées indépendamment l'une de l'autre à l'aide d'au moins deux dispositifs à capteur (34, 35).

3. Procédé selon la revendication 2, **caractérisé en ce que** des signaux pour l'intensité du vent et la direction du vent, générés par les dispositifs à capteur (34, 35), au nombre d'au moins deux, sont comparés l'un à l'autre, le signal du dispositif à capteur (34, 35) qui présente la plus grande intensité de signal étant pris en compte pour la compensation de l'influence du vent latéral.

4. Procédé selon une des revendications 1 à 3, **caractérisé en ce que** pour un rapprochement de la répartition réelle à la répartition de consigne, on modifie de manière continue une vitesse de déplacement de l'élément de guidage (7), au nombre d'au moins un.

5. Moissonneuse-batteuse (1) automotrice, comprenant un dispositif de séparation axial (2) qui génère un flux de produit résiduel et l'amène à un dispositif d'épandage (9), notamment un épandeur à tôles d'éparpillement (24), qui est placé à la suite du dispositif de séparation axial (2) et évacue le flux de produit résiduel de la moissonneuse-batteuse (1), le dispositif de séparation axial (2) présentant, dans la zone de distribution de produit (GA) côté extrémité, au moins un élément de guidage (7) qui peut être déplacé par un actionneur (31) et agit sur une répartition réelle du flux de produit résiduel sortant, sur la largeur d'amenée du dispositif d'épandage (9), au moins une unité à capteur (10) étant prévue pour la détection de la répartition réelle du flux de produit résiduel, et comprenant un dispositif de commande (14) qui est conçu pour déterminer un écart par rapport à une répartition de consigne prédéfinie, et pour activer l'actionneur (31) en fonction de l'écart, aux fins d'ajustement de l'élément de guidage (7), le dispositif de commande (14) étant conçu pour recevoir au moins un signal représentant un vent latéral, depuis au moins une source de signal (34, 35), et l'utiliser en tant que grandeur perturbatrice lors de l'ajustement automatique de l'élément de guidage (7), un rapport de répartition équilibré sur la largeur d'amenée du dispositif d'épandage (9, 24) étant prédéfini en tant que répartition de consigne, **caractérisée en ce que** le dispositif de commande (14) est relié à une unité d'entrée-sortie de la moissonneuse-batteuse (1), laquelle permet à un opérateur de la moissonneuse-batteuse (1) de prédéfinir une valeur correspondante pour la répartition de consigne.

6. Moissonneuse-batteuse (1) selon la revendication 6, **caractérisé en ce que** les dispositifs à capteur (34, 35), au nombre d'au moins deux, sont installés au-dessus du dispositif d'épandage (9) et en dessous de la zone de distribution de produit (GA) du dispositif de séparation axial (2).

7. Moissonneuse-batteuse (1) selon la revendication 6 ou 7, **caractérisée en ce que** les dispositifs à capteur (34), au nombre d'au moins deux, placés en vis-à-vis l'un de l'autre, sont réalisés sous forme de plaque à vent (35), d'anémomètre à coupelles ou d'anémomètre à coques.

8. Moissonneuse-batteuse (1) selon une des revendications 6 à 8, **caractérisée en ce que** l'unité à capteur (10), au nombre d'au moins une, est installée à au moins un emplacement de mesure (11), dans la zone d'amenée (19) d'un dispositif de hachage (6) placé à la suite du dispositif de séparation axial (2), et/ou sur le fond (20) entourant par portions un tambour porte-couteaux du dispositif de hachage (6) placé en aval.

9. Moissonneuse-batteuse (1) selon une des revendications 6 à 9, **caractérisée en ce que** l'unité à capteur (10), au nombre d'au moins une, est réalisée sous forme de règle de mesure (21) qui présente plusieurs éléments capteurs (22) espacés les uns des autres.
